(19)

**Europäisches Patentamt**
**European Patent Office**
**Office européen des brevets**

(11) **EP 1 999 200 B1**

(12) **EUROPEAN PATENT SPECIFICATION**

(45) Date of publication and mention
of the grant of the patent:
**03.07.2013 Bulletin 2013/27**

(51) Int Cl.:
*C08J 9/28* (2006.01)         *B29C 41/28* (2006.01)
*B01D 67/00* (2006.01)

(21) Application number: **07740808.6**

(22) Date of filing: **27.03.2007**

(86) International application number:
**PCT/JP2007/057372**

(87) International publication number:
**WO 2007/114421 (11.10.2007 Gazette 2007/41)**

(54) **PRODUCTION METHOD OF POROUS FILM**

VERFAHREN ZUR HERSTELLUNG EINES PORÖSEN FILMS

PROCÉDÉ DE FABRICATION D'UNE PELLICULE POREUSE

(84) Designated Contracting States:
**DE FR GB**

(30) Priority: **28.03.2006 JP 2006088613**

(43) Date of publication of application:
**10.12.2008 Bulletin 2008/50**

(73) Proprietor: **FUJIFILM Corporation**
**Minato-ku**
**Tokyo 106-8620 (JP)**

(72) Inventors:
• **SHIMOMURA, Masatsugu c/o Hokkaido University**
**Kita-ku, Sapporo-shi, Hokkaido (JP)**
• **YABU, Hiroshi c/o Hokkaido University**
**Kita-ku, Sapporo-shi, Hokkaido (JP)**

• **MIKI, Yasufumi c/o Hokkaido University**
**Kita-ku, Sapporo-shi, Hokkaido (JP)**
• **YAMAZAKI, Hidekazu**
**Minami-ashigara-shi, Kanagawa 250-0193 (JP)**
• **ITO, Koju**
**Minami-ashigara-shi, Kanagawa 250-0193 (JP)**

(74) Representative: **HOFFMANN EITLE**
**Patent- und Rechtsanwälte**
**Arabellastrasse 4**
**81925 München (DE)**

(56) References cited:
JP-A- 2003 294 905      JP-A- 2003 318 010
JP-A- 2006 070 254      US-A- 4 954 381
US-A1- 2003 106 487

**Description**

Technical Field

The present invention relates to a production method of a porous film, and especially to a production method of a porous film having a fine pattern.

Background Art

In recent years, the higher integration degree, the higher information density and the higher image definition are moreover required in the field of the optical materials and the electric materials. Therefore, the forming of the fine structure (the fine patterning) is also required to the film to be used in such fields. The fine structure of the film is called a fine pattern structure in the following explanation. In the field of the research for the regenerative medicine, a film having a surface of the fine structure is effectively used as a base material for the cell culture (for example, Japanese Patent Laid-Open Publication 2001-157574).
For the fine patterning of the film, there are several methods, such as a deposition method with use of mask, an optical lithography to which the photochemical reaction and the polymerization are applied, and a laser-ablation and the like.
Further, as described in the Japanese Patent Laid-Open Publication No. 2002-335949, when the dilut solution of the predetermined polymer is cast under high humidity, the film to be produced has a honeycomb structure of micron scale. Such a film is called a self assembled film because of behavior of the fine patterning. A production method of a self assembled film is described in Japanese Patent Laid-Open Publications No. 2003-151766 and 2002-347107. Further, the film of the honeycomb structure (hereinafter honeycomb film) that contains the functional particles is used as an optical material and electric material. For example, as described in Japanese Patent Laid-Open Publication No. 2003-128832, the honeycomb film containing luminescence material is used as a display device. Further, in the Japanese Patent Laid-Open Publication No. 2003-149096, the film having a large number of uniform pores is used for the blood filtration.
Further, the film having the surface of the fine pattern is also used for a polarizing filter as the optical material. For example, there is a film provided with the moth-eye structure so as to have an antireflective function. Such a film has the well-regulated fine pattern in the range of submicron to dozen microns. In the main production method of this film, the main production method of this film is described in the Japanese Patent Laid-Open Publication No. 2003-302532. In this method, a plate is formed with use of a micro processing technology, mainly the optical lithography, and the structure of the plate is copied to the film.
However, as in the methods described in the first, second, fourth and fifth ones in above Publications, namely, No. 2001-157574, 2002-335949, 2002-347107 and 2003-128832, in the honeycomb film production, when the polymer solution is coated on a support under high moisture, the size and the arrangement of the pores cannot be uniform. Further, the method of the first, second, fourth and fifth publications are restricted in a batch manner, and there are neither concrete descriptions nor suggestions about the mass production. Furthermore, in the publication No. 2003-151766, a base plate is slid in a predetermined direction such that the pore pattern of the porous film may be formed. However, there are no concrete descriptions about temperatures of the atmosphere and the support. Therefore, the description is not enough for the mass production of the honeycomb film that is to be performed continuously. Further, the method described in the sixth publication, namely, No. 2003-149096, is called the top-down method, in which the plate for determining the fine structure as described above is produced. In order to produce the plate, many complicated processes are necessary, which cause the increase of the cost. Furthermore, it is hard to produce the plate of the large size.
JP 2006 070254 A discloses a method of producing porous film from an organic polymer solution comprising amphiphilic components or polymers by condensing water on the surface in a bedewing process at delta T (T dew point - T surface of the film) in the claimed range, growing the droplets, evaporating the organic solvent and subsequently evaporating the water droplets.
An object of the present invention is to provide a production method of a porous film, in which the porous film having the uniform honeycomb structure or a moth-eye structure is produced in large size in low cost.
Another object of the present invention is to provide a production method of a porous film, in which the porous film is continuously or intermittently produced while the size, the form and the density of the pores of the film are uniform.

Disclosure of Invention

In order to achieve the object and the other object, in a production method of a porous film, a solution containing an organic solvent and an amphiphilic compound and a polymer or an amphiphilic polymer which has a hydrophilic group and a hydrophobic group is cast onto a support so as to form a casting film, and a moisture is bedewed on the casting film under a condition of $3°C \leq \Delta T \leq 30°C$ so as to form water droplets when $\Delta T$ is defined as a difference of a surface temperature TS (unit; $°C$) of the casting film from a dew point TD (unit; $°C$) of an atmosphere near the casting film. After the forming of the water droplets, a growth of the water droplet under a condition of $0°C \leq \Delta T \leq 10°C$ and an evaporation of the organic solvent from the casting film are performed. After the growth of the water droplets and the evaporation of the organic solvent, the water droplets are evaporated from the casting film, such that the dew point TD and the surface temperature TS may satisfy a condition of TD < TS.

Further, $\Delta T$ is varied from a higher value to a lower value in the bedewing step.

Preferably, a wet air is flown near the casting film by a humidification device for the formation of the water droplets.

Preferably, a temperature of the support is gradually increased from forming to evaporating the water droplets. Particularly preferably, a temperature of the support is increased at 0.005°C/sec or more.

Preferably, the amphiphilic compound is a low molecular compound and the organic solvent is a hydrophobic compound. The solution contains the organic solvent of 100 pts.wt., the polymer solution in the range of 0.02 pts.wt. to 20 pts.wt., and the amphiphilic compound in the range of 0.1 % and 20 % as weight ratio to the polymer. Particularly when the number of the hydrophilic group in the amphiphilic compound is described as M and the number of said hydrophobic group in said amphiphilic compound is described as N, a ratio of M / N is in the range of 0.1/9.9 to 4.5/5.5.

Preferably a viscosity of the solution is in the range of 0.1 mPa·s to 50 mPa·$s$. Particularly when the number of the hydrophilic group in the amphiphilic compound is described as M and the number of said hydrophobic group in said amphiphilic compound is described as N, a ratio of M / N is in the range of 0.1/9.9 to 4.5/5.5.

Preferably, the casting of the solution is continuously or intermittently made onto a running support. When a direction of a wind speed of the wet air is represented as a wind speed vector W and an imaginary plane includes a side edge of the support and is perpendicular to the support, an angle $\theta 1$ of an orthogonally projected vector Wxy on the imaginary plane to said support satisfy a condition $0°C \leq \theta 1 \leq 90°C$. Particularly preferably, a magnitude of a component of the wind speed vector W in a moving direction of the support is |Wy| and an average of the magnitude is |Wy|$_{avg}$, and a dispersion of the magnitude |Wy| through a width of the support is at most 20% of the average |Wy|$_{avg}$. Especially preferably, a magnitude of a component of the wind speed vector W in a normal direction of the support is |Wx| and an average of the magnitude is |Wx|$_{avg}$, and a dispersion of the magnitude |Wx| through a width of the support is at most 20% of the average |Wx|$_{avg}$. More especially preferably, when a running direction of the support is a y-direction of the wind speed vector W and a widthwise direction of the support is a z-direction of the wind speed vector W, an angle $\theta 2$ of the running direction of said support to an orthogonally projected vector Wyz (Wy, Wz) of the wind speed vector W on the support is more than 0° and at most 10°.

Preferably, a heat transfer rate k of the support and a thickness L of the support satisfy a condition, $100 \ W/(m^2 \cdot K) \leq k/L \leq 100,000 \ W/(m^2 \cdot K)$.

Preferably, the solution contains two different sorts of the amphiphilic compounds. The solution contains two different sorts of the polymers. Further, the solution contains two different sorts of the solvents.

According to a production method of a porous film, the porous film can be continuously or intermittently produced at a reasonable cost to be a large size, and to have pores arranged uniformly and densely.

Brief Description of Drawings

Figure 1 is a flow chart of a film production process for producing a porous film of the present invention;
Figures 2A to 2D are explanatory views for forming the porous film;
Figure 3A is a plan view of a first embodiment of the porous film of the present invention;
Figure 3B is a sectional view of the first embodiment of the porous film along a line b-b in FIG. 3A;
Figure 3C is a sectional view of the first embodiment of the porous film along a line c-c in FIG. 3A;
Figure 3D is a sectional view of a second embodiment of the porous film of the present invention;
Figure 3E is a sectional view of a third embodiment of the porous film of the present invention;
Figure 4 is a schematic diagram of an embodiment of a film production line for performing the film production process;
Figure 5 is an explanatory view illustrating a direction and a wind speed of a wet air;

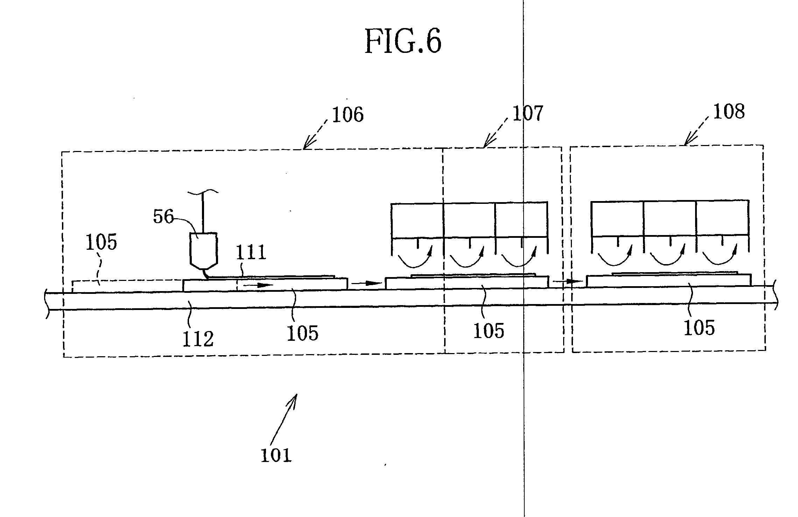

Figure 6 is a schematic diagram of another embodiment of a film production line for performing the film production process.

Best Mode for Carrying Out the Invention

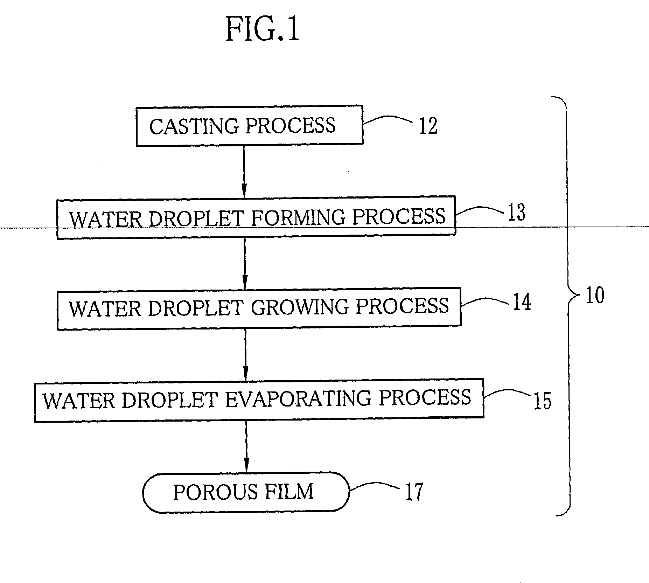

In FIG. 1, a film production process 10 includes a casting process 12, a water droplet forming process 13, a water droplet growing process 14 and a water droplet evaporating process 15. In the casting process 12, a solution to be explained in detail later is cast onto a support, so as to form a casting film. For the casting, there are two methods.

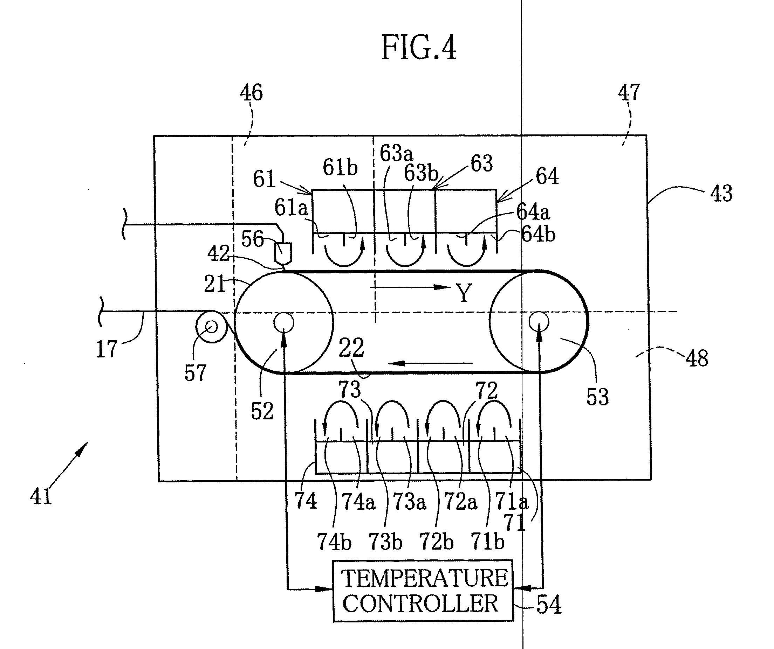

In the first method, the solution is cast onto a stationary disposed support and smoothed over it, and in the second method, the solution is cast onto a running support. In the present invention, both of the two methods can be applied. If it is designated to apply the first method, the productivity becomes lower, and therefore the first method is usually not adequate for the mass production. If it is designated to apply the second method, the productivity becomes higher, and the second method is adequate for the mass production. Especially in the second method, if the casting of the solution is continuously made, a continuous porous film 17 can be produced, and if the casting of the solution is intermittently made at a predetermined interval, a plurality of the porous films having a predetermined length can be produced one by one. Note that the film production process 10 is performed by a film production line 41 (see, FIG. 4).

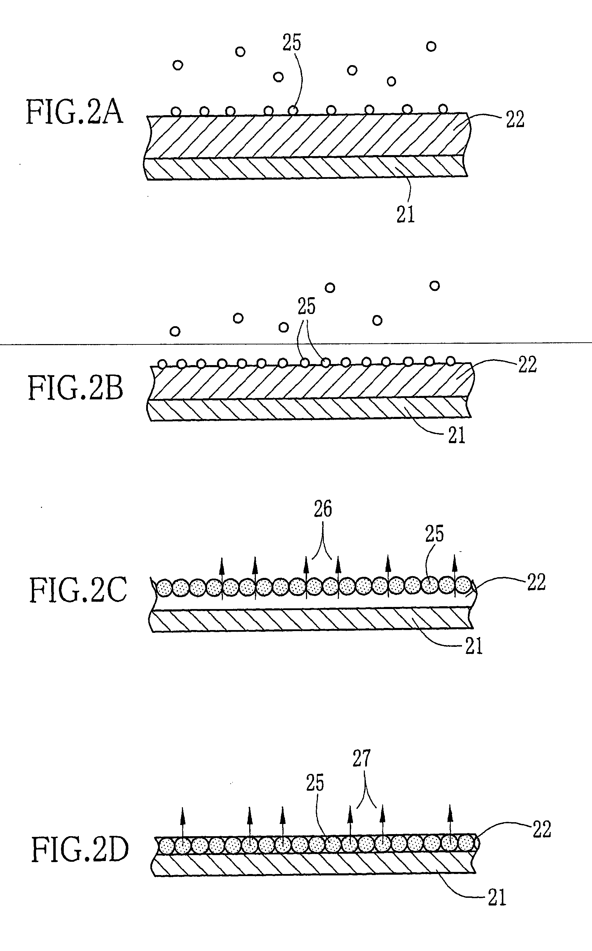

In the water droplet forming process 13, as shown in FIGS. 2A and 2B, the moisture in the atmosphere is bedewed on the casting film 22 to form a plurality of water droplets 25. The water droplets 25 are too small to be recognized with eyes. Then, the water droplets 25 grow slowly in the water droplet growing process 14. The object of this process is to integrate or combine some of the extremely small water droplets so as to form each larger water droplet. Otherwise, depending on the temperature of a casting film 22 and the conditions around the casting film 22, each water droplet 25 formed in the water droplet forming process 13 sometimes makes a roll of such a core as to grow to be larger. Further, a solvent 26 is evaporated during or after the growth of the water droplets. Thus, in FIG. 2C, the water droplets 25 penetrate into the casting film 22. Note that droplet of other liquid materials may be that instead of the water droplet.

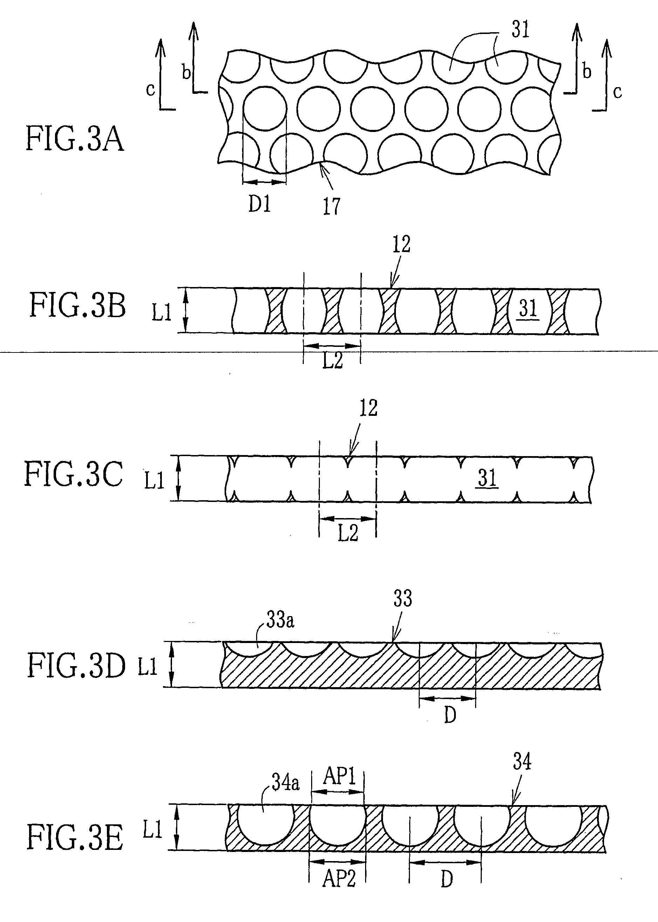

When the conditions of the water droplets 25 become predetermined ones, the water droplet evaporating process 15 is performed. In this case, as shown in FIG. 2D, the water droplets 25 in the casting film 22 are evaporated to be water vapor 27. If there is a remaining solvent 26 in the casting film 22, the evaporation of the remaining solvent 26 is made at first, as much as possible, and then the conditions are changed so as to make the evaporation of the water droplets 25. Thus, the casting film 22 on the support 21 forms the porous film 17, as illustrated in FIGs. 3A - 3E. Usually, the porous film 17 is used after the peeling from the support.

The porous film 17 has an extremely large number of pores formed at high density. As shown in FIG 3A, the porous film 17 has a plurality of pores 31 which are formed to have a honeycomb structure. Thus the pores are regularly arranged with a predetermined form and size. As shown in FIGs. 3B & 3C, each pore is formed through the porous film 17 in a thickness direction. However, a plurality of recesses may be formed instead of the pores. For example, in FIG. 3D, a porous film 33 has a plurality of recesses 33a, and in FIG. 3E, a porous film 34 has a plurality of recesses 34a. As for the recess 34 in FIG. 3E, a surface diameter AP1 of each recess on a film surface of the porous film 34 is smaller than the largest diameter AP2 on a cross section of a imaginary face parallel to the film surface. In the porous film 33, 34, although each recess 33a, 34a is independently formed, the present invention is not restricted in this embodiment. For example, in the present invention, the recesses may be formed to be combined. It means, the distance D between the centers of neighboring recesses is smaller than the surface diameter AP1 or the largest diameter AP2. The arrangement of the pores 31 and the recesses 33a, 34a is different depending on conditions; a crude density and a largeness of the formed water droplets, sorts of liquid droplets to be formed, a drying speed, solid content in the solution, and the like. Note that the sorts of the liquid droplets are different depending on the sorts of the compounds in the droplets, and therefore the droplets are not restricted in the water droplets in the present invention.

Further, in the water droplet growing process, if the timing of starting the evaporation of the solvent is earlier, the casting film 22 is dried in a situation that a penetration rate of the water droplets into the casting film 22 is not so large. If the timing of starting the evaporation of the solvent is later, the casting film 22 is dried in a situation that a penetration rate of the water droplets into the casting film 22 is large. Thus the largeness and the arrangement of the pore 31 and the recesses 33a, 34b becomes different depending on the change of the solvent evaporation and the timing of starting the solvent evaporation.

The embodiment of the porous film 17, 33, 34 to be produced in the present invention is not restricted especially. However, in order to make the film production especially effectively, for example, a thickness L1 of the porous film 17, 33, 34 is in the range of 0.05 $\mu$m to 100 $\mu$m. A diameter D1 of each pore on the film surface of the porous film 17 is in the range of 0.05 $\mu$m to 100 $\mu$m, a distance between centers of neighboring pores 31 is in the range of 0.1 $\mu$m to 120 $\mu$m.

In the following, an embodiment of the present invention for producing the porous film 17 will be explained. However, embodiments for producing the porous films 33, 34 are substantially the same. Therefore, the production method of the porous film 33, 34 will be omitted. The porous film 17 contains a polymer and amphiphilic compound. The amphiphilic compound means a compound having both of a hydrophilic character and a lipophilic (hydrophobic) character, and concretely has a hydrophilic group and a lipophilic group. If the polymer has the amphiphilic character, it is not necessary to use the other amphiphilic compounds with polymer. However, if the polymer to be used for producing the porous film 17 is regarded to have no amphiphilic character, it is preferable to use the amphiphilic compound with the polymer.

The sort of the polymer as a main material of the porous film 17 can be chosen in accordance with use of the porous film 17. However, it is preferable that the number average molecular weight (Mn) of the polymer is in the range of 10, 000 to 10, 000, 000, and especially 5,000 to 1,000,000.

The polymer to be used with the amphiliphic compound is preferably a compound which is hardly dissolved to a nonaqueous solvent, namely a hydrophobic solvent. For example, there are poly- ε -caprolactone, poly-3-hydroxybutylate, agarose, poly-2-hydroxyethylacrylate, polysulfone and the like. However, the biodegradative characteristic is sometimes necessary. In this case, the particularly preferable polymer compound is poly-ε-caprolactone, since the cost is low and it is easily obtained.

As other examples of the polymer to be used with the amphiphilic compound, there are vinyl-type polymer (for example, polyethylene, polypropylene, polystyrene, polyacrylate, polymethacrylate, polyacrylamide, polymethacrylamide, polyvinyl chloride, polyvivylidene chloride, polyvinylidene fluoride, polyhexafluoropropene, polyvinyl ether, polyvinylcarbazol, polyvinyl acetate, polytetrafluoro ethylene, and the like), polyesters (for example, polyethylene terephthalate, polyethylene naphthalate, polyethylene saccinate, polybutylene saccinate, polylactic acid, and the like), polylactone (for example, polycaprolactone, and the like), polyamide / polyimide (for example, nylon, polyamide, and the like), polyurethane, polyurea, polycarbonate, polyaromatics, polysulfone, polyethersulfone, polysiloxane derivative, and the like. These may be used as homo polymer, and otherwise used as copolymer, polymer blend or polymer alloy if necessary, in view of solubility, optical physical properties, electric physical property, film strength, elasticity and the like.

As the polymer having the amiphiphilic character, there are, for example, polyacrylamide. As the other polymer having the amiphiphilic character, there are a compound which has a main chain of polyacrylamide, a lipophilic side chain of dodecyl group and hydrophilic side chain of carboxyl group, block copolymer of polyethylene glycol / polypropylene glycol, and the like. The lipophilic side chain is nonpolar normal (linear) chain such as alkylene, phenylene and the like, and preferably has a structure in which hydrophilic group (for example polar group or ionic dissociative group) doesn't divide until the end of the chain. The lipophilic side chain preferable has at least five methylene units if it is composed of alkylene group. The hydrophilic side chain composed of alkylene group preferably has a structure having hydrophilic part, such as oxyethylene group, polar group or ionic dissociative group on the end of the alkylen group.

The amiphiphilic compound to be mixed with the polymer is not only a monomer such as many sorts of surfactants sold in the market but also a dimmer, a trimer and the like of oligomer, and a polymer. When the amiphiphilic compound and the polymer are mixed, the water droplets are more easily formed on an exposure surface of the casting film. Further, when the dispersion condition of the polymer is controlled, the positions for forming the water droplets are more easily adjusted. When the polymer and the amiphiphilic compound are mixed, a weight ratio of the amiphiphilic compound to the polymer is preferably in the range of 0.1 % to 20 %. Thus the pores to be formed in the porous film become uniform. If the weight ratio is less than 0.1 %, the effects of adding the amiphiphilic compounds are too low, and therefore the water droplets are unstably formed. Thus the water droplets becomes nonuniform. If the weight ratio is more than 20 %, the strength of the porous film becomes lower.

In the amiphiphilic compound to be mixed with the polymer preferably, a ratio of the number of hydrophilic group (M) to the number of hydrophobic group (N), namely (M/N), is preferably in the range of 0.1 / 9.9 to 4.5 / 5.5. Thus the more fine water droplets are formed more densely. If the ratio doesn't satisfy the above range, the size of the pores becomes various, and concretely, a variation coefficient (%) of the porous diameter that is determined as {(standard deviation of porous diameter) / (average of porous diameter)} $\times$ 100 becomes 10 % or more. Further, if the ratio of (M/N) doesn't satisfy the above range, it sometimes becomes hard to arrange the pores regularly.

Preferably, at least sorts of the amiphiphilic compounds are used. Thus it becomes easier to control the position and the size of the water droplets. Preferably, at least two sorts of the polymers are used, such that the same effects may be obtained.

The sort of the solvent to be used in the present invention is not restricted, so far as it is hydrophobic and the polymer can be dissolved to it. For example, there are chloroform, dichloromethane, tetrachloromethane, cyclohexane, methyl acetate and the like.

The solvent may contain at least two different sorts of the solvent components, and the mixture ratio thereof may be changed adequately so as to control the formation speed of he water droplets, the penetration depth of the water droplets into the casting film 22 and the like.

Preferably, the content of the polymer is in the range of 0.02 pts.wt. to 20 pts.wt., if the content of the organic solvent is determined as 100 pts.wt. Thus the porous film of high quality can be produced with high productivity. If the content of the polymer to the 100 pts.wt. of the organic solvent is less than 0.02 pts.wt., the ratio of the solvent in the solution is too large, and therefore it takes long time for the evaporation. Thus the productivity of the film becomes lower. If the content of the polymer to the 100 pts.wt. of the organic solvent is less than 20 pts.wt., the bedewed water droplets cannot change the form of the casting film. Thus the irregular unevenness is formed on the porous film.

The higher viscosity of the solution causes the bedewed water droplets not to move. The lower viscosity of the solution causes the combining of the water droplets, and therefore the porous diameter becomes nonuniform. Preferably the viscosity of the solution is in the range of 0.1 mPa·s to 50 mPa·s. Thus pores of the porous film to be produced become uniform. If the viscosity is less than 0.1 mPa·s, the water droplets are combined and therefore the surface diameter AP1 and the largest diameter AP2 sometimes become nonuniform. If the viscosity is more than 50 mPa·s, the water droplets are sometimes arranged irregularly.

As shown in FIG. 4, the film production line 41 for performing the film production process 10 (see, FIG. 1) has a casting chamber 43 for casting a solution 42 onto a support 21. The solution 42 is previously filtrated before sent to the film production line 41, such that foreign materials may not be contained in the solution 42 to be cast. Particularly preferably, the filtration is performed several times. For example, when the filtration is made twice, it is preferable that a filtration device (not shown) in the upstream side includes a filter material whose absolute filtration accuracy (absolute normal diameter) is larger than a diameter of the pore 31 of the porous film 17 and a filtration device (not shown) in a downstream side high quality can be produced with high productivity. If the content of the polymer to the 100 pts.wt. of the organic solvent is less than 0.02 pts.wt., the ratio of the solvent in the solution is too large, and therefore it takes long time for the evaporation. Thus the productivity of the film becomes lower. If the content of the polymer to the 100 pts.wt. of the organic solvent is less than 20 pts.wt., the bedewed water droplets cannot change the form of the casting film. Thus the irregular unevenness is formed on the porous film.

The higher viscosity of the solution causes the bedewed water droplets not to move. The lower viscosity of the solution causes the combining of the water droplets, and therefore the porous diameter becomes nonuniform. Preferably the viscosity of the solution is in the range of 0.1 mPa·s to 50 mPa·s. Thus pores of the porous film to be produced become uniform. If the viscosity is less than 0.1 mPa·s, the water droplets are combined and therefore the surface diameter AP1 and the largest diameter AP2 sometimes become nonuniform. If the viscosity is more than 50 mPa·s, the water droplets are sometimes arranged irregularly.

As shown in FIG. 4, the film production line 41 for performing the film production process 10 (see, FIG. 1) has a casting chamber 43 for casting a solution 42 onto a support 21. The solution 42 is previously filtrated before sent to the film production line 41, such that foreign materials may not be contained in the solution 42 to be cast. Particularly preferably, the filtration is performed several times. For example, when the filtration is made twice, it is preferable that a filtration device (not shown) in the upstream side includes a filter material whose absolute filtration accuracy (absolute normal diameter) is larger than a diameter of the pore 31 of the porous film 17 and a filtration device (not shown) in a downstream side includes a filter material whose absolute filtration accuracy is smaller than a diameter of the pore 31 of the porous film 17.

The casting chamber 43 is used for performing the casting process 12, the water droplet forming process 13, the water droplet growing process 14 and the water droplet evaporating process 15 in the film production process 10 (see, FIG. 1). The solvent vapor in the casting chamber 43 is recovered by a recovering device (not shown) and recycled or refined by a refining device (not shown) provided outside the casting chamber 43. Thus the solvent materials are reused for preparing a solution 42.

In the casting chamber 43, there are first - third areas 46 - 48 for performing the casting process 12 and the water droplet forming process 11, the water droplet growing process 14 and the water droplet evaporating process 15 (see, FIG. 1). Concretely, the casting process 12 and the water droplet forming process 13 are performed in the first area 46, the water droplet growing process 14 in the second area 47, and the water droplet evaporating process 15 in the third area 48. The first - third areas 46 - 48 are neither partitioned nor separated in this embodiment. However, the first - third areas 46 - 48 may be partitioned, separated, or independently provided. Especially when the first - third areas 46 - 48 are independently provided, the first and second areas are preferably closed as far as possible. When the casting film 22 is fed through the first - third areas 46 - 48, the self-organization occurs in the casting film 22, such that the casting film 22 may become the porous film 17.

The support 21 is lapped on back-up rollers 52, 53, and a casting die 56 is disposed above the support 21. At least one of the back-up rollers 52, 53 is driven by a driving device (not shown) such that the support 21 may continuously run. The temperatures of the back-up roller 52, 53 are controlled by a temperature controller 54, such that a temperature of the support 21 may be controlled. Further, a heat transfer rate k and a thickness L of the support 21 preferably satisfy a condition, 100 W/ (m$^2$·K) $\leq$ k/L $\leq$ 100,000 W/ (m$^2$·K). If the value k/L is less than 100 W/ (m$^2$·K), the heat transfer property becomes is low and therefore the conditions of the support 21 cannot change in accordance with the variation of the temperature. Concretely, the temperature control of the casting film 22 becomes hard, and therefore it becomes hard to control the surface diameter AP1 and the largest diameter AP2 of the pores. If the value k/L is more than 100,000 W/ (m$^2$·K), the heat transfer unevenness of the temperature controller 54, namely the fluctuation of the temperature control accuracy has influence on the temperature conditions of the casting film 22 immediately. Therefore the surface diameter AP1 and the largest diameter AP2 sometimes become irregular. The thickness L is preferably in the range of 0.05 mm to 10 mm. Thus the temperature control is performed more speedy and elaborative. Especially, when it is difficult to change immediately the conditions of the atmosphere around the casting film 22, the support 21 of this embodiment is effective. Further, on the support 21, there may be a plate member or a flexible sheet as a second support such that a casting film may be formed on the second support. Further, the support in this embodiment is the continuous support. However, a plate member or a flexible sheet may be used instead of the support 21 and the rollers 52, 53. In this case, it is preferable that the plate member or flexible sheet includes a peltier element. When the plate member or the flexible sheet is disposed on a member having a horizontal face whose temperature is controllable, the temperature control can be made at high accuracy in each plate member or each flexible sheet.

In the first area 46, when the solution 42 is cast from the casting die 56 so as to form the casting film 22 on the support 21. In a downstream from the casting die 56 in a running direction Y of the support 21, there is an air feeding / aspirating unit 61 which has an outlet 61a for feeding a wet air out near the casting film 22 and an inlet 61b for aspirating the gas around the casting film 22. Further, there is a controller (not shown) for independently controlling a temperature, a dew point, a humidity, a wind speed of the air to be fed out and an aspiration force of the air to be aspirated. The outlet 61a has a filter for keeping a dust level, namely a cleaning level. A plurality of the air feeding / aspirating unit 61 may be arranged in the running direction Y.

The dew point of the air from the outlet 61a is described as TD, and a surface temperature of the casting film 22 is described as TS. A value ∆T is defined as TD-TS. In this case, at least one of the values TD and TS is controlled, such that a following condition may be satisfied:

$$3°C \leq \Delta T \leq 30°C$$

The surface temperature TS is, for example, measured by a non-contact thermometer (such as an infrared thermometer and the like in the market) that is disposed near the casting film 22. If the value ∆T is less than $3°C$, the water droplet is hardly generated. If the value ∆T is more than $30°C$, the water droplet generates suddenly. In this case, the water droplet becomes nonuniform and otherwise, the water droplets, which should be arranged in two dimensional arrangement (in a matrix manner), are arranged in three dimensional arrangement in which one of the water droplet overlaps on the other one. In the first area 46, it is preferable that the value ∆T is varied from the larger one to the smaller one. Thus the formation speed of the water droplets and teh largeness of the water droplets to be formed are controlled, and the formed water droplets have the uniform diameter in two dimensions, namely in a surface diameter of the casting film 22.

In the first area 46, the surface temperature TS of the casting film 22 is controlled by the temperature adjustment of the support 21 and a temperature controlling plate (not shown) disposed so as to confront to the support 21. However, the surface temperature TS may be at least one of the support 21 and the temperature controlling plate. Furthermore, the dew point TD is controlled by adjusting the humidification conditions of the air fed out from the outlet 61a.

In the second area 47, air feeding / aspirating units 63, 64 are sequentially arranged in the running direction Y. The air feeding / aspirating unit 63 has an outlet 63a and an inlet 63b, and is disposed closely next to and downstream from the air feeding / aspirating unit 61, such that the water droplet formed in the first area 46 may be grown uniformly by the air feeding / aspirating unit 63. The air feeding / aspirating unit 64 has an outlet 64a and an inlet 64b and disposed in downstream from the air feeding / aspirating unit 63. If the distance between the first area 46 and the second area 47 becomes larger, namely if it takes longer time from the formation of the water droplet to the arrival at the second area 47, the water droplets are formed nonuniformly. A number of the air feeding /aspirating units in the second area 47 is not restricted in two, but may be one or at least three. The air feeding / aspirating units 63, 64 are the same as the air feeding / aspirating unit 61 in this embodiment. However, the present invention is not restricted in it.

Also in the second area 47, the surface temperature TS of the casting film 22 is controlled so as to satisfy the condition of ∆T:

$$0°C < \Delta T \leq 10°C$$

Thus, the temperature of a temperature controlling plate (not shown) is varied in the running direction Y. The structure of the temperature controlling plate in the second area 47 is substantially the same as that in the first area 46. Further, if the dew point TD is controlled so as to satisfy the above condition of ∆T, the humidification conditions of the air from the outlet 63a is controlled. In the second area 47, the surface temperature TS is measured by the same thermometer as in the first area 46. In the second area 47, since the conditions are controlled as described above, the water droplets are grown slowly and arranged in effects of the capillary force. Thus the uniform water droplets are formed densely. If the value ∆T is 0°C or less, the water droplet does not enough grow. Therefore, the formation, the size and the arrangement of the pores in the porous film becomes nonuniform. If the value ∆T is more than 10°C, the water droplets overlap locally (in three dimensional arrangement). Therefore, the formation, the size and the arrangement of the pores in the porous film becomes nonuniform.

Preferably, the surface temperature TS and the dew point TD are almost same in the second area 47.

During the growing of the water droplets, it is preferable the quantity of the solvent to be evaporated is larger so far as possible. If the above conditions about the surface temperature TS and the dew points TD in the second area 47 are satisfied, the solvent is evaporated enough and the rapid evaporation is prevented. Further, it is preferable to make a selective evaporation, namely to evaporate not the water droplet but only the solvent. Therefore, it is preferable that the solvent component evaporates at higher speed than the water droplet under the same temperature and the same pressure. Thus the water droplet penetrates into the casting film 22 easily, in accordance with the evaporation of the solvent.

The wind speed of the wet air in the first and second areas 46, 47 is shown with vector, which is called a wind speed vector W in followings. According to the wind speed vector, if the support is stationary disposed, it means the vector of the wind speed, and if the support 21 runs, the element of the wind speed vector in the running direction of the support means the vector of the relative speed to the running speed of the support. In this figure, three axes being perpendicular each other are defined as x-, y-, z-axes. The x-axis is directed in a normal line direction of the support 21 so as to extend from a cast surface of the support 21. Therefore, the x-axis is positive in a direction to a casting side in which the casting is made. The y-axis extends in the moving direction of the support 21, so as to be positive in the moving direction. The z-axis extends in the widthwise direction of the support 21, so as to protrude perpendicularly from this figure. In considering a xy plane which includes a side edge of the support 21 and is perpendicular to the support 21, a vector Wxy (Wx, Wy) is named an orthogonally projected vector defined as a vector of an orthogonal projection of the wind speed vector W on the xy plane. In this case, an angle $\theta 1$ of the orthogonally projected vector Wxy (Wx, Wy) to the support 21 preferably satisfies a condition, $0° \leq \theta 1 < 90°$. Thus the water droplet is arranged regularly. In case of $\theta 1 \geq 90°$, since the wet air is an air blow opposing or perpendicularly flowing to the moving direction of the casting film 22, the water droplets are arranged irregularly.

Further, it is preferable that the running direction Y of the support 21 crosses with a vector Wyz (Wy, Wz), while the vector Wyz is named an orthogonally projected vector defined as a vector of the orthogonal projection of the wind speed vector W on the support 21. Note that the support 21 onto which an orthogonal projection of the wind speed vector W is performed is an yz plane. An angle $\theta 2$ between the running direction of the support 21 and the vector Wyz (Wy, Wz) is preferably in the range of 0° to 10°. If the angle $\theta 2$ is larger than 10°, the water droplets are formed nonuniformly in the widthwise direction. Therefore the water droplets cannot be nonuniform and irregular.

Note that the support 21, onto which the orthogonally projected vector of the wind speed vector W is considered, is on an yz plane. Further, the wind direction and the wind speed of the humidified atmosphere is preferably same and constant in the widthwise direction of the support 21. Especially, when the wind direction and the wind speed are measured at several points arranged in the widthwise direction of the support 21, an angle $\theta 1$ between the vector Wxy of the humidified atmosphere and the support 21 is preferably the same at each point. Further, the wind direction and the wind speed of the humidified atmosphere are measured at several points arranged in the widthwise direction of the support 21. According to the measurement results, a largeness |Wx| of the Wx element of the vector Wxy (Wx, Wy) is measured at each point, and the averaged value |Wx|$_{avg}$ of the value |Wx| is calculated. At each point, it is preferable that the value |Wx| of the wind speed vector satisfies a condition:

$$|Wx| \leq |Wx|_{avg} + \{\text{a value of 20 \% of } |Wx|_{avg}\}.$$

According to the plurality of the wind speed vector in the widthwise direction, the largeness of the element of each wind speed vector is also preferably controlled, such that the fluctuation of the largeness may be at most 20 %. Especially preferably the fluctuation is 0 %. Thus the uniformity of the porous structure in the widthwise direction of the casting film 22 becomes higher.

In the third area 48, there are four air feeding/aspirating units 71 - 74 that are arranged in the running direction Y and respectively have outlets 71a, 72a, 73a, 74a and inlets 71b, 72b, 73b, 74b. The number of the air feeding / aspirating units is not restricted in 4 as in this embodiment, but may be 1, 2, 3 or at least five. The air feeding / aspirating units 71 - 74 is the same as the air feeding / aspirating units 61, but may be different.

Also in the third area 48, at least one of the surface temperature TS and the dew point TD is controlled so as to satisfy the condition:

$$TS > TD$$

The control of the surface temperature TS is made by the temperature of the temperature controlling plate (not shown), and the control of the dew point TD is made by adjusting the conditions of the drying air from the outlet 63a. In the third area 48, as in the first and second areas 46, 47, the surface temperature TS is measured by the same thermometer as the above one disposed near the casting film 22. Since the conditions of the third area 48 are set described above, the growth of the water droplets is stopped and then the evaporation thereof is made such that the porous film 17 having uniform pores may be produced. In case of TS≤TD, the dewing is made on the formed water droplets, and therefore the porous structure already formed will be destroyed.

In the third area 48, although the main object is the evaporation of the water droplets, the remaining solvent not evaporated before the third area 48 is also evaporated.

In the third area 48 for performing the evaporating process 15 (see, FIG. 1), a decompressing dryer or a 2D nozzle may be used instead of the air feeding / aspirating units 71 - 74. In this case, the evaporation of the organic solvent and the water droplets is made adequately and the water droplets are formed in the casting film 22 adequately. Therefore, the pores 31, which are uniform in the largeness and the shape, are made at positioned of the water droplets. Note that the 2D nozzle has a feeding nozzle for feeding out the wind and an aspirating nozzle for aspirating the air around the casting film 22. The preferable 2D nozzle feeds and aspirates the air uniformly all over a width of the casting film 22. Preferably, the surface temperature TS of the casting belt 21 is gradually increased from the first area 46 to the third area 48. Thus the evaporation speed is controlled, and therefore the evaporation of the solvent can be made effectively without the destruction of the porous structure. The speed of the temperature increase is preferably in the range of 0.005 °$C$/sec to 3 °$C$/sec.

The film production line 41 further has a roller 57 for supporting the porous film 17 obtained by peeling the casting film 22 from the support 21. After the peeling, the porous film 17 is fed to a next process, for example, function providing process for providing several functions for the porous film 17 and a winding process for winding the porous film 17 to a film roll.

In the present invention, it is preferable in the first and second areas 46, 47 that the feeding speed of the wet air from the air feeding / aspirating units 61, 63, 64 is controlled, such that a relative speed of the wet air to the running speed of the support 21 may be preferably in the range of 0.05 m/s to 20 m/s, particularly 0.1 m/s to 15 m/s and especially 0.5 m/s to 10 m/s. If the relative speed is less than 0.05 m/s, the water droplets are sometimes not arranged regularly before the feeding of the casting film 22 into the third area 48. If the relative speed is more than 20 m/s, the condition of the exposure surface of the casting film 22 sometimes becomes bad, or the bedewing sometimes does not proceed.

If a film composed of several sorts of functional materials is used as the support, a multilayer porous film is obtained, in which the porous film to be produced is overlapped on the film of the functional material.

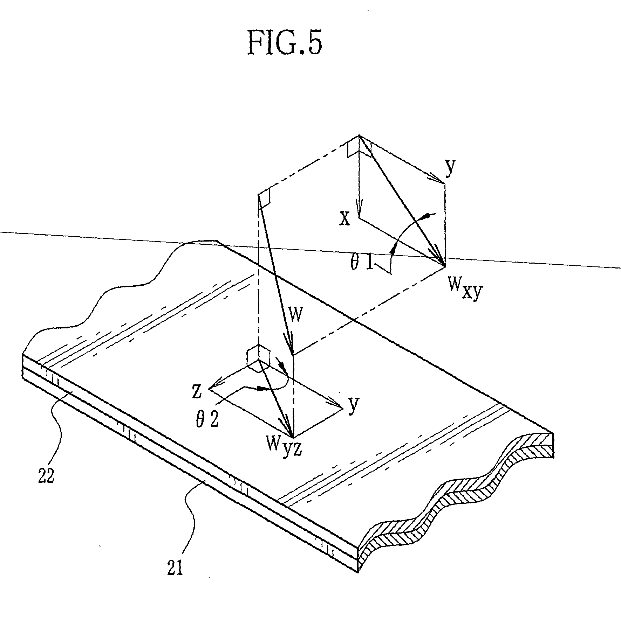

In this embodiment, the casting of the solution 42 is continuously made in the production of the continuous porous film 17. However, the present invention is not restricted in it. For example, the solution 42 may be cast intermittently, such that the produced porous film may be a sheet type. As shown in FIG. 5, the porous film of the sheet type is produced in a film production line 101 including first - third areas 106 - 108. In the first area 106, the casting of the solution 42 and the bedewing are made. In the second area 107, the growth of the water droplets and the evaporation of the solvent are made. In the third area 108, the evaporation of the water droplets is made. In the first area 106, the solution 42 is cast from the casting die 56 onto a support 105 conveyed by a conveyer belt 112, so as to form a casting film 111. Then the support 105 on which the casting film 111 is formed is conveyed in a downstream side, and the bedewing is made to form the water droplets. Thereafter, the support 105 is conveyed by the conveying belt 112 such that the casting film 111 on which the water droplets are formed may enter into the second area 107. In the second area 107, the water droplets are grown. Then the casting film 111 into which the water droplets penetrate is transported into the third area 108, in which the evaporation of the water droplets is made. In this embodiment, the processing of the one support is made in each area, so as to make the film production intermittently.

Note that a casting die whose width is smaller width than the casting die 56 may be used. In this case, a plurality of the casting dies are arranged in a widthwise direction of the support, such that casting films with smaller width may be formed. Further, the conveyance of the support in the casting process may be made intermittently at a shorter interval such that a plurality of the casting films of smaller size may be formed on the support. Further, a die lip of the casting die may be partitioned to have a plurality of partitions arranged in the widthwise direction. In this case, if the intermittent casting is made, the porous films of the strip type are formed one after another.

In followings, embodiments of the present invention will be described. However, the present invention is not restricted in them. Note that Experiments 1-3 are examples of the present invention, and Comparisons 1, 2 are comparisons to the present invention.

[Experiment 1]

<Example 1>

The porous film having the honeycomb structure was produced such that the pores are formed throughout in both of thickness direction and in-plane direction, and arranged in an in-plane direction. The polymer was poly-ε-caprolactone (PCL), the amphiphilic compound to be used as the polymer was polyalkylacrylamide, and the solvent was dichloromethane. According to the polyalkylacrylamide, a rate M/N was 2.5/7.5. Then 0.8 mg/ml of the PCL and 0.08 mg/ml of polyalkylacrylamide was mixed to the solvent, and thus the solution is prepared. Then the solution was cast onto the support 21. Note that the viscosity of the cast solution was 1 mPa·$s$. The support 21 was a PET (polyethyrene telephthalate) film whose thickness L was 0.1 mm. If the heat transfer rate is described as k, a value k/L is 1400W of this example.

The support 21 is transported such that the casting film 22 may pass through the first area 46, the second area 47, and the third area 48 sequentially. The conditions of $\Delta T$ in the first - third areas 46 - 48 were $10°C \leq \Delta T \leq 20°C$, $0°C < \Delta T \leq 5°C$, and $-30 °C \leq \Delta T \leq -0.5 °C$ respectively. However, $\Delta T$ was controlled to be smaller in the downstream area. Further, the wind speed vector W, $\theta 1$ was 2° and $\theta 2$ was 0°. The angles of $\theta 1$ and $\theta 2$ of the wind speed vector W were controlled so as to be at any position the same and constant values in the widthwise direction of the casting film 22. Thus the pores 31 are formed throughout in both of thickness direction and in-plane direction of the porous film 17. The porous diameter was 10 $\mu$m, and the fluctuation coefficient thereof was 3.5%.

<Example 2>

According to the polyalkylacrylamide, the rate M/N was 5/5. The other conditions were the same as Example 1. The porous diameter of the obtained porous film was 10 $\mu$m, and the fluctuation coefficient of the porous diameter was 7.8 %. Thus the obtained porous film 17 has the less uniformity of the pore than Example 1 and more uniformity of the pore than Comparison 1.

<Comparison 1>

The conditions of $\Delta$T in the first - third areas 46 - 48 were $10°C \leq \Delta T \leq 15°C$, $10°C \leq \Delta T \leq 15°C$, and $-30°C \leq \Delta T \leq 0.5°C$ respectively. The other conditions were the same as in Example 1. The fluctuation coefficient of the porous diameter of the obtained porous film was 11%. As a result, the uniformity of the pores was less high than Example 1.

[Experiment 2]

<Example 3>

The porous film (not shown) having the honeycomb structure was produced such that the pores are formed throughout only in the in-plane direction but not in the thickness direction. In order to prepare the solution, 5.0 mg/ml of the PCL and 0.5 mg/ml of polyalkylacrylamide were mixed to the solvent, and the mixture was stirred for dispersing. The other conditions were the same as Example 1. In Example 3, the recesses, namely the pores which isn't formed in the thickness direction, was formed. However, the recesses were not independently formed as the recesses 33a, 34a of FIG. 3, but combined to each other. Therefore, in the porous film of this example, the distance D between the centers of the neighboring pores was smaller than the largest diameter AP2 of each pore. The surface diameter AP1 of the obtained porous film was 8 $\mu$m, and the fluctuation coefficient (a percentage of the fluctuation) of the surface diameter AP1 was 3.8 %.

[Example 4]

In order to prepare the solution, 100 mg/ml of the PCL and 10 mg/ml of polyalkylacrylamide were mixed to the solvent, and the mixture was stirred for dispersing. The viscosity of the solution was 100 mPa·s. The other conditions were the same as Example 3. The fluctuation coefficient of the surface diameter AP1 of each pore was 9.5 %. The arrangement and the largeness regularity of the recesses were less than the porous film obtained in Example 3. However, the porous film in Example 4 could be usable.

[Example 5]

The film production line 101 was used for the casting. As the support 105, a glass plate was used. The thickness L of the glass plate was 20 mm. If the heat transfer rate is described as k, the value k/L is 50 W/ $(m^2 \cdot K)$ . The discharge of the solution from the casting die 56 was intermittently made in accordance with the transfer speed of the glass plate as the support 105. Other conditions were the same as Example 3. The fluctuation coefficient of the surface diameter AP1 of the obtained porous film was 7.5 %. The arrangement and the largeness regularity of the recesses were less than the porous film obtained in Example 3. However, the porous film in Example 5 could be usable.

[Example 6]

According to the conditions of wind speed of the wet air, $\theta 1$ was 95° and $\theta 2$ was 12°. Other conditions were the same as Example 4. The fluctuation coefficient of the surface diameter AP1 of each pore in the obtained porous film was 11 %. The arrangement and the largeness regularity of the recesses were less than the porous film obtained in Example 3. However, the porous film in Example 6 could be usable.

<Comparison 2>

The conditions of ΔT in the first - third areas 46 - 48 were 3°C ≤ ΔT ≤ 10°C, 10°C ≤ ΔT ≤15°C, and -30°C ≤ ΔT -0.5°C respectively. The other conditions were the same as in Example 3. The fluctuation coefficient of the surface diameter AP1 of the obtained porous film was 12%. As a result, the uniformity of the pores was less high than Comparison 1.

**Claims**

1. A production method of a porous film, comprising steps of:

   casting onto a support a solution containing an organic solvent and (i) an amphiphilic compound and a polymer or (ii) an amphiphilic polymer, so as to form a casting film, said amphiphilic compound or amphiphilic polymer having a hydrophilic group and a hydrophobic group;
   bedewing a moisture on said casting film under a condition of 3°C < ΔT < 30°C so as to form water droplets, when ΔT is defined as a difference of a surface temperature TS (unit; °C) of said casting film from a dew point TD (unit; °C) of an atmosphere near said casting film, and a value of ΔT is defined as TD-TS,
   performing after the forming of said water droplets a growth of said water droplet under a condition of 0°C < ΔT < 10°C and an evaporation of said organic solvent from said casting film; and
   evaporating said water droplets from said casting film after the growth of said water droplets and the evaporation of said organic solvent, such that said dew point TD and said surface temperature TS may satisfy a condition of TD < TS chracterized in that ΔT is varied from a higher value to a lower value in the bedewing step.

2. A production method according to claim 1, wherein said solution contains a further polymer different from the polymer in component (i) or (ii).

3. A production method according to claim 1, further comprising flowing a wet air near said casting film by a humidification device for the formation of said water droplets.

4. A production method according to claim 1, further comprising gradually increasing a temperature of said support from forming to evaporating said water droplets.

5. A production method according to claim 4, wherein a temperature of said support is increased at 0.005°C/sec or more.

6. A production method according to claim 1,
   wherein said organic solvent is a hydrophobic compound; and
   wherein said solution contains said organic solvent of 100 pts.wt., said polymer solution in the range of 0.02 pts.wt. to 20 pts.wt, and said amphiphilic compound in the range of 0.1 % and 20 % as weight ratio to said polymer.

7. A production method according to claim 6, wherein when the number of said hydrophilic group in said amphiphilic compound is described as M and the number of said hydrophobic group in said amphiphilic compound is described as N, a ratio of M/N is in the range of 0.1/9.9 to 4.5/5.5.

8. A production method according to claim 1, wherein a viscosity of said solution is in the range of 0.1 mPa·s to 50 mPa.s.

9. A production method according to claim 8, wherein when the number of said hydrophilic group in said amphiphilic compound is described as M and the number of said hydrophobic group in said amphiphilic compound is described as N, a ratio of M/N is in the range of 0.1/9.9 to 4.5/5.5.

10. A production method according to claim 1,
    wherein the casting of said solution is continuously or intermittently made onto a running support; and
    wherein when a direction of a wind speed of said wet air is represented as a wind speed vector W and an imaginary plane includes a side edge of said support and is perpendicular to said support, an angle θ1 of an orthogonally projected vector Wxy on said imaginary plane to said support satisfy a condition

$$0° \leq \theta 1 < 90°.$$

**11.** A production method according to claim 10,
wherein a magnitude of a component of said wind speed vector W in a moving direction of said support is |Wy| and an average of said magnitude |Wy| is $|Wy|_{avg}$,
wherein a dispersion of said magnitude |Wy| through a width of said support is at most 20% of said average $|Wy|_{avg}$.

**12.** A production method according to claim 11,
wherein a magnitude of a component of said wind speed vector W in a normal direction of said support is |Wx| and an average of said magnitude |Wx| is $|Wx|_{avg}$,
wherein a dispersion of said magnitude |Wx| through a width of said support is at most 20% of said average $|Wx|_{avg}$.

**13.** A production method according to claim 12,
wherein a running direction of said support is a y direction of said wind speed vector W and a widthwise direction of said support is a z-direction of said wind speed vector W, and
wherein an angle 82 of said running direction of said support to an orthogonally projected vector Wyz (Wy, Wz) of said wind speed vector W on said support is more than 0° and at most 10°.

**14.** A production method according to claim 1, wherein a heat transfer rate k of said support and a thickness L of said support satisfy a condition, 100

$$W/(m^2 \cdot Z) < k/L < 100,000\ W/(m^2 \cdot K).$$

**15.** A production method according to claim 1, wherein said solution contains two different sorts of said amphiphilic compounds.

**16.** A production method according to claim 1, wherein said solution contains two different sorts of said polymers.

**17.** A production method according to claim 1, wherein said solution contains two different sorts of said solvents.

**Patentansprüche**

**1.** Herstellungsverfahren für eine poröse Folie, das die Schritte umfasst:

Gießen einer Lösung, die ein organisches Lösungsmittel und (i) eine amphiphile Verbindung und ein Polymer oder (ii) ein amphiphiles Polymer enthält, auf einen Träger, um eine gegossene Folie zu formen, wobei die amphiphile Verbindung oder das amphiphile Polymer eine hydrophile Gruppe und eine hydrophobe Gruppe aufweist;
Benetzen der gegossenen Folie mit Feuchtigkeit unter der Bedingung von 3°C < ΔT < 30°C, um Wassertropfen zu formen, wenn ΔT definiert ist als der Unterschied zwischen der Oberflächentemperatur TS (Einheit; °C) der gegossenen Folie und dem Taupunkt TD (Einheit; °C) einer Atmosphäre in der Nähe der gegossenen Folie, und ein Wert von ΔT definiert ist als TD-TS;
nach dem Bilden der Wassertropfen Durchführen eines Wachstums der Wassertropfen unter einer Bedingung von 0°C < ΔT < 10°C und Verdampfung des organischen Lösungsmittels von der gegossenen Folie; und
Verdampfen der Wassertropfen von der gegossenen Folie nach dem Wachstum der Wassertropfen und der Verdampfung des organischen Lösungsmittels, so dass der Taupunkt TD und die Oberflächentemperatur TS die Bedingung TD < TS erfüllen können,
**dadurch gekennzeichnet, dass** in dem Benetzungsschritt ΔT von einem höheren Wert zu einem niedrigeren Wert geändert wird.

**2.** Herstellungsverfahren gemäß Anspruch 1, worin die Lösung ein weiteres, von dem Polymer in Komponente (i) oder (ii) verschiedenes Polymer enthält.

3. Herstellungsverfahren gemäß Anspruch 1, das ferner ein Vorbeiströmen von feuchter Luft in der Nähe von der gegossenen Folie durch eine Luftbefeuchtungsvorrichtung zur Bildung der Wassertropfen umfasst.

4. Herstellungsverfahren gemäß Anspruch 1, das weiterhin ein allmähliches Erhöhen der Temperatur des Trägers vom Bilden, zum Verdampfen der Wassertropfen umfasst.

5. Herstellungsverfahren gemäß Anspruch 4, worin die Temperatur des Trägers mit 0,005°C/Sekunde oder mehr erhöht wird.

6. Herstellungsverfahren gemäß Anspruch 1, worin das organische Lösungsmittel eine hydrophobe Verbindung ist; und worin die Lösung das organische Lösungsmittel mit 100 Gew.-Teilen, die Polymerlösung im Bereich von 0,02 Gew.-Teilen bis 20 Gew.-Teilen und die amphiphile Verbindung im Bereich von 0,1 % und 20 % als Gewichtsverhältnis zu dem Polymer enthält.

7. Herstellungsverfahren gemäß Anspruch 6, worin, wenn die Anzahl der hydrophilen Gruppen in der amphiphilen Verbindung als M definiert ist und die Anzahl der hydrophoben Gruppen in der amphiphilen Verbindung als N definiert ist, das Verhältnis M/N im Bereich von 0,1/9,9 bis 4,5/5,5 liegt.

8. Herstellungsverfahren gemäß Anspruch 1, worin die Viskosität der Lösung im Bereich von 0,1 mPa·s bis 50 mPa·s beträgt.

9. Herstellungsverfahren gemäß Anspruch 8, worin, wenn die Anzahl der hydrophilen Gruppen in der amphiphilen Verbindung als M definiert ist und die Anzahl der hydrophoben Gruppen in der amphiphilen Verbindung als N definiert ist, das Verhältnis M/N im Bereich von 0,1/9,9 bis 4,5/5,5 liegt.

10. Herstellungsverfahren gemäß Anspruch 1,
worin das Gießen der Lösung kontinuierlich oder intermittierend auf einen laufenden Träger ausgeführt wird; und worin, wenn die Richtung einer Windgeschwindigkeit der feuchten Luft als ein Windgeschwindigkeitsvektor W dargestellt ist und eine imaginäre Ebene einen Seitenrand des Träger enthält und rechtwinklig zum Träger steht, ein Winkel $\theta 1$ eines orthogonal auf die imaginäre Ebene projizierten Vektors Wxy zu dem Träger die Bedingung

$$0° \leq \theta 1 < 90°$$

erfüllt.

11. Herstellungsverfahren gemäß Anspruch 10,
worin der Betrag einer Komponente des Windgeschwindigkeitsvektors W in der Bewegungsrichtung des Trägers $|Wy|$ ist und der Durchschnitt des Betrags $|Wy|$ $|Wy|_{avg}$ ist,
worin die Streuung des Betrags $|Wy|$ über die Breite des Trägers höchstens 20 % des durchschnittlichen $|Wy|_{avg}$ beträgt.

12. Herstellungsverfahren gemäß Anspruch 11,
worin der Betrag einer Komponente des Windgeschwindigkeitsvektors W in einer Normalrichtung des Trägers $|Wx|$ ist und der Durchschnitt des Betrags $|Wx|$ $|Wx|_{avg}$ ist,
worin die Streuung des Betrags $|Wx|$ über die Breite des Trägers höchstens 20 % des durchschnittlichen $|Wx|_{avg}$ beträgt.

13. Herstellungsverfahren gemäß Anspruch 12,
worin eine Bewegungsrichtung des Trägers eine y-Richtung des Windgeschwindigkeitsvektors W ist und eine Breitenrichtung des Trägers eine z-Richtung des Windgeschwindigkeitsvektors W ist, und
worin ein Winkel $\theta 2$ der Bewegungsrichtung des Trägers zu einem orthogonal auf den Träger projizierten Vektor Wyz (Wy, Wz) des Windgeschwindigkeitsvektors W mehr als 0° und höchstens 10° beträgt.

14. Herstellungsverfahren gemäß Anspruch 1, worin eine Wärmedurchgangskoeffizient k des Trägers und eine Dicke L des Trägers die Bedingung

$$100 \ W/m^2 \cdot Z < k/L < 100000 \ W/(m^2 \cdot K) \ \text{erfüllt.}$$

**15.** Herstellungsverfahren gemäß Anspruch 1, worin die Lösung zwei verschiedene Arten der amphiphilen Verbindungen enthält.

**16.** Herstellungsverfahren gemäß Anspruch 1, worin die Lösung zwei verschiedene Arten der Polymere enthält.

**17.** Herstellungsverfahren gemäß Anspruch 1, worin die Lösung zwei verschiedene Arten der Lösungsmittel enthält.


**Revendications**

**1.** Procédé de production d'un film poreux, comprenant les étapes consistant à :

couler sur un support une solution contenant un solvant organique et (i) un composé amphiphile et un polymère ou (ii) un polymère amphiphile, de façon à former un film coulé, ledit composé amphiphile ou polymère amphiphile ayant un groupe hydrophile et un groupe hydrophobe ;
humecter ledit film coulé dans une condition de 3 °C <$\Delta$T < 30 °C de façon à former des gouttelettes d'eau, $\Delta$T étant défini comme la différence d'une température de surface TS (unité ; °C) dudit film coulé par rapport au point de rosée TD (unité ; °C) d'une atmosphère proche dudit film coulé, et la valeur $\Delta$T étant définie comme TD-TS,
après formation desdites gouttelettes d'eau, faire grossir lesdites gouttelettes d'eau dans une condition de 0 °C < $\Delta$T< 10 °C et chasser par évaporation le solvant organique contenu dans ledit film coulé ; et
chasser lesdites gouttelettes d'eau dudit film coulé par évaporation après les avoir fait grossir et après avoir chassé par évaporation ledit solvant organique, de façon que ledit point de rosée TD et ladite température de surface TS puissent satisfaire une condition de TD < TS,
ledit procédé étant **caractérisé en ce que** l'on fait varier $\Delta$T d'une valeur haute à une valeur basse pendant l'étape d'humectage.

**2.** Procédé de production selon la revendication 1, dans lequel ladite solution contient un autre polymère différent du polymère du composant (i) ou (ii).

**3.** Procédé de production selon la revendication 1, comprenant en outre l'étape consistant à faire s'écouler de l'air humide à proximité dudit film coulé à partir d'un dispositif d'humidification pour former lesdites gouttelettes d'eau.

**4.** Procédé de production selon la revendication 1, comprenant en outre l'étape consistant à élever progressivement la température dudit support depuis la formation jusqu'à l'évaporation desdites gouttelettes d'eau.

**5.** Procédé de production selon la revendication 4, dans lequel la température dudit support est élevée à 0,005 °C/s ou plus.

**6.** Procédé de production selon la revendication 1,
dans lequel ledit solvant organique est un composé hydrophobe ; et
dans lequel ladite solution contient ledit solvant organique à raison de 100 parties en poids, ladite solution polymère dans la plage de 0,02 à 20 parties en poids, et ledit composé amphiphile dans la plage de 0,1 à 20 % en poids par rapport audit polymère.

**7.** Procédé de production selon la revendication 6, dans lequel quand le nombre desdits groupes hydrophiles dans ledit composé amphiphile est noté M et que le nombre desdits groupes hydrophobes dans ledit composé amphiphile est noté N, un rapport de M/N est dans la plage de 0,1/9,9 à 4,5/5,5.

**8.** Procédé de production selon la revendication 1, dans lequel la viscosité de ladite solution est dans la plage de 0,1 à 50 mPa·s.

**9.** Procédé de production selon la revendication 8, dans lequel quand le nombre desdits groupes hydrophiles dans ledit composé amphiphile est noté M et que le nombre desdits groupes hydrophobes dans ledit composé amphiphile est noté N, un rapport de M/N est dans la plage de 0,1/9,9 à 4,5/5,5.

**10.** Procédé de production selon la revendication 1,
dans lequel le coulage de ladite solution est effectué en continu ou par intermittence sur un support qui se déplace ; et
dans lequel quand la direction d'une vitesse de vent dudit air humide est représentée par un vecteur de vitesse de vent W et qu'un plan imaginaire englobe un bord latéral dudit support et est perpendiculaire audit support, un angle θ1 d'un vecteur à projection orthogonale Wxy sur ledit plan imaginaire par rapport audit support satisfait une condition

$$0° \leq \theta1 < 90°.$$

**11.** Procédé de production selon la revendication 10, dans lequel un ordre de grandeur d'une composante dudit vecteur de vitesse de vent W dans une direction de déplacement dudit support est $|Wy|$ et une moyenne dudit ordre de grandeur $|Wy|$ est $|Wy|_{avg}$,
dans lequel une dispersion dudit ordre de grandeur $|Wy|$ sur une largeur dudit support est d'au plus 20 % de ladite moyenne $|Wy|_{avg}$.

**12.** Procédé de production selon la revendication 11, dans lequel un ordre de grandeur d'une composante dudit vecteur de vitesse de vent W dans une direction perpendiculaire audit support est $|Wx|$ et une moyenne dudit ordre de grandeur $|Wx|$ est $|Wx|_{avg}$,
dans lequel une dispersion dudit ordre de grandeur $|Wx|$ sur une largeur dudit support est d'au plus 20 % de ladite moyenne $|Wx|_{avg}$.

**13.** Procédé de production selon la revendication 12, dans lequel une direction de déplacement dudit support est une direction y dudit vecteur de vitesse de vent W et une direction dans le sens de la largeur dudit support est une direction z dudit vecteur de vitesse de vent W, et
dans lequel un angle θ2 de ladite direction de déplacement dudit support par rapport à un vecteur à projection orthogonale Wyz (Wy, Wz) dudit vecteur de vitesse de vent W sur ledit support est supérieur à 0° et d'au plus 10°.

**14.** Procédé de production selon la revendication 1, dans lequel une vitesse de transfert de chaleur k dudit support et une épaisseur L dudit support satisfont une condition 100 W/ (m$^2$•Z) < k/L < 100 000 W/(m$^2$•K).

**15.** Procédé de production selon la revendication 1, dans lequel ladite solution contient deux différentes sortes desdits composés amphiphiles.

**16.** Procédé de production selon la revendication 1, dans lequel ladite solution contient deux différentes sortes desdits polymères.

**17.** Procédé de production selon la revendication 1, dans lequel ladite solution contient deux différentes sortes desdits solvants.

# FIG.1

CASTING PROCESS — 12

WATER DROPLET FORMING PROCESS — 13

WATER DROPLET GROWING PROCESS — 14

WATER DROPLET EVAPORATING PROCESS — 15

POROUS FILM — 17

10

FIG.2A

FIG.2B

FIG.2C

FIG.2D

FIG.3A

FIG.3B

FIG.3C

FIG.3D

FIG.3E

## FIG.4

TEMPERATURE
CONTROLLER

EP 1 999 200 B1

# FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001157574 A
- JP 2002335949 A
- JP 2003151766 A
- JP 2002347107 A
- JP 2003128832 A

- JP 2003149096 A
- JP 2003302532 A
- JP 2002347107AND2003128832 B
- JP 2006070254 A